# EUROPEAN PATENT APPLICATION

(11) **EP 4 814 855 A1**
(43) Date of publication of application: **30.09.2026**
(21) Application number: 25167126.9
(22) Date of filing: 28.03.2025
(51) Int. Cl.: G06Q 50/06, H02J 13/00, G06N 3/08

(54) **METHOD AND SYSTEM TO OPERATE A POWER GRID WITH DYNAMIC SECURITY AWARENESS**

(71) Applicant: Hitachi Energy Ltd, 8050 Zürich (CH)
(72) Inventor: POLAND, Jan, 5415 Nussbaumen (CH); NUQUI, Reynaldo, Cary, North Carolina, 27513 (US); PAN, Jiuping, Raleigh, North Carolina, 27606 (US); SHCHETININ, Dmitry, 5600 Lenzburg (CH); RIPAMONTI, Nicolo, 5430 Wettingen (CH); YI, Ji Hyun, 5400 Baden (CH); BERGGREN, Bertil, 722 10 Västerås (SE); KRZYSIAK, Janina, 30126 Krakow (PL)
(74) Representative: Vossius & Partner Patentanwälte Rechtsanwälte mbB

(57) **Abstract**

The disclosure provides a method for determining a grid related optimization task solution for a power grid described by a plurality of decision variables, the method comprising: a machine learned model constrained nonlinear program, NLP, step comprising steps a) to c), preferably in this order: a) determining, by a machine learned model, dynamic security inequality constraints which are dependent on continuous decision variables and a plurality of contingencies; b) optimizing an objective function over the continuous decision variables of the plurality of decision variables and first contingencies of the plurality of contingencies, wherein the dynamic security inequality constraints are considered, wherein at least one of the objective function and the dynamic security inequality constraints is non-linear; c) setting the continuous decision variables of the plurality of decision variables according to the optimized objective function; and determining the grid related optimization task based on the plurality of decision variables

## Description

The present disclosure relates to a method for determining a grid related optimization task solution for a power grid, a corresponding computer program and a corresponding non-transitory computer-readable medium.

Power grids can be planed and/or simulated using grid related optimization tasks, like optimal power flow (OPF). Dynamic stability and dynamic security are often not captured by steady state models and hence not respected by conventional OPFs.

There have been attempts to model dynamic stability constraints in OPF. The literature A. Berizzi et al.: "OPF model with dynamic security constraints: a state of the art review" (IEEE) discusses several direct and indirect approaches, which are all computationally very expensive, their applicability is restricted to grids of small limited size, and they can cover only a limited number of contingencies.

The known technology shows disadvantages as being computational expensive, applicability being restricted to small grid sizes, limed number of contingencies, not being scalable and more.

The above-mentioned disadvantages are at least partly overcome and/or advantages mentioned herein are at least partly achieved with the features of the independent claims. Dependent claims define preferred embodiments of the present disclosure.

The present disclosure relates to a method for determining a grid related optimization task solution for a power grid, a corresponding computer program and a corresponding non-transitory computer-readable medium.

The present disclosure relates to a method for determining a grid related optimization task solution for a power grid described by a plurality of decision variables, the method comprising: a machine learned model constrained nonlinear program (NLP) step comprising steps a) to c), preferably in this order: step a) determining, by a machine learned model, dynamic security inequality constraints which are dependent on continuous decision variables and a plurality of contingencies; step b) optimizing an (first) objective function over the continuous decision variables of the plurality of decision variables and first contingencies of the plurality of contingencies, wherein the dynamic security inequality constraints are considered, wherein at least one of the (first) objective function and the dynamic security inequality constraints is non-linear; step c) setting the continuous decision variables of the plurality of decision variables according to the optimized (first) objective function; and determining the grid related optimization task solution based on the plurality of decision variables.

The grid related optimization task may be an OPF. The OPF may be a security constrained OPF (SCOPF). The grid related optimization task may be an optimization task with relation to power flow. In the optimization task, power flow equations may define a set of constraints. Alternatives to the OPF may be other grid related optimization tasks (may also be called (grid) related optimization problems) as: Unit Commitment (UC), SCUC and Network Constrained UC (NCUC), and Economic Dispatch (ED) and SCED.

OPF may be used for planning, simulation, and for operation of power grids. Power grid operation may include operation of transmission grids, distribution grids, and even clearing of energy markets at various time scales: long term ahead, week ahead, day ahead, intraday (up to here they can be seen as planning tasks), furthermore near real time and real time. For instance, OPF is routinely used for making real time decisions such as setpoint adjustment, redispatch, load shedding, and generation shedding.

The machine learned model (ML model) may be a neural network (NN). Other machine learned models may be used. The machine learned model may be trained on data. The data may be previously calculated one or more power grids, possibly contingencies, and an information about the stability, as for example whether the power grid is dynamically secure.

The machine learned model may not be trained further after an initial training. The machine learned model may be used for the grid related optimization task, after initial training. In some embodiments, the machine learned model may be further trained even when it is already being used in the grid related optimization task. This may include: determining a grid related optimization task solution, which may be solving and/or optimizing of the grid related optimization task, preferably for a solution which should not violate dynamic security, using the machine learned model; followed by validating the dynamic security of the solution with a conventional simulation, which does not comprise a use of a machine learned model; and then, when the conventional simulation results in a solution which violates dynamic security, add this instance to the machine learned model training data and re-train the machine learned model.

Preferably, the machine learned model is only used for step a), but not for any of steps b) to e) (steps d and e are disclosed below). The machine learned model may model an approximation of the dynamic security inequation constraint, and/or the machine learning model may represent the dynamic security constraint (meaning the dynamic security inequality constraints) for the optimization in step b). The machine learned model may run/be implemented on a processor, computer, server and/or similar.

For example in step b), optimizing the (first) objective function (f(x); first objective function may be the same as the objective function, to be better distinguished from the second objective function) may be done also considering one or more equality constraints (g_{eq}(x) = 0), and/or one or more inequality constraint (g(x) ≤ 0), besides the dynamic security inequality constraints (g_{ML}(x, C^{(k)}); in this contingencies may be symbolized as "C^{(k)}", the counter of the iteration as "k", and the plurality of decision variables as "x"). One or more of the one or more equality constraints and/or of the one or more inequality constraint may be soft constraints. Preferably one or more, possibly all, of them are hard constraints. The plurality of decision variables (x) may comprise, preferably consist of, continuous decision variables and discrete decision variables. The plurality of decision variables (x) may be a vector of real values (x ∈ R^{d}, where d may be the number of the plurality). For step b), if the grid related optimization task problem is formulated by using discrete decision variables, these discrete decision variables may be relaxed to the continuous decision variable. Optimizing may be minimizing or maximizing the objective function over the corresponding decision variables. The grid related optimization task solution (short: solution) may be the decision variables for the optimized objective function.

Discrete decision variables may correspond to discrete decisions for grid operation, such as (importantly for Unit Commitment) switching on or off a generator, but it could be also switching of a load, or other devices in the grid such as tap changers with discrete settings. Also, there may be discrete auxiliary variables present in OPF-related problems, such as variables marking the startup or the shutdown of a generator. Further, continuous decision variables may correspond to continuous decisions for grid operation, e.g. the amount of power generated by a generator. There may also be continuous auxiliary variables present in OPF-related optimization problems. Relaxation of discrete variables may be replacing a discrete decision variable with a continuous decision variable.

The objective function (f(x)) may be and/or may be related to fuel consumption or total line losses or other factors which may be desired to be minimized and/or optimized. Other factors may be carbon emissions, contractual conditions, etc.

The dynamic security inequality constraints (g_{ML}(x, C^{(k)})) may be an estimate of the machine learned model for the dynamic instability risk. The dynamic security inequality constraints are dependent on the continuous decision variables, preferably on the plurality of decision variables, and the plurality of contingencies. The dynamic security inequality constraints may all be hard constraints. One or more of them may be soft constraints.

Step b) may be set up with an initial list of the plurality of contingencies *C*⁽¹⁾ = (*c*₁, *c*₂, *... , c*_{*N*1} *)* of constraints defined by the machine learned model related to a selected set of dynamic security inequality constraints *c*₁*, c*₂*, ... , c*_{*N*1}*,* i.e. a selected set of first contingencies under which dynamic stability needs to be satisfied according to the prediction of the machine learned model, from step a). This list of the first contingencies may be smaller than the entire list of the plurality of contingencies the ML model has been trained for. For a given operating point, it may be that only a small number of contingencies might cause dynamic instability. The initial list of considered first contingencies can be selected for instance by solving an initial optimization problem, like an initial OPF problem, as explained later, or by any other approach, e.g. guided by the grid operator's experience, or it can be empty.

step c) is setting the continuous decision variables to the values for which the objective function was optimized before. step c) may overwrite old continuous decision variable from before the optimization of step b) of the same iteration.

NLP (nonlinear program / nonlinear programming) may be a process of solving an optimization problem, as the grid related optimization task, where some of the constraints are not linear equalities or the objective function is not a linear function.

The disclosed method may be scalable to large grids, and may be computationally economic, and may not be limited to a specific number of contingencies. The disclosed method can provide a solution to a grid related optimization task with controlled risk of dynamic instability.

Various embodiments may preferably implement the following features.

Preferably, the machine learned model constrained NLP step further comprises steps d) and e), preferably in that order and after step c): step d) determining whether the power grid would be dynamically secure with other contingencies of the plurality of contingencies not comprised by the first contingencies; and step e) adding the other contingencies under which the power grid is determined to not be dynamically secure to the first contingencies and, with the other contingencies added to the first contingencies, repeating steps a) to e).

After optimizing the (first) objective function, dynamic security is checked with respect to the other contingencies (step d). If it is found that there are other dynamic security violations that need to be mitigated, the corresponding constraints are included into the NLP, giving rise to an extended list of contingencies *C*⁽²⁾ and the NLP is re-solved (step e). This process may be repeated until there are not more violated dynamic security constraints to take care of. In some embodiments, step e repeats steps a) to d), instead of steps a) to e).

Preferably, the method comprises further: a discrete optimization step comprising: optimizing a second objective function over discrete decision variables of the plurality of decision variables, wherein the discrete optimization step is implemented before the machine learned model constrained NLP step, and wherein the objective function is dependent on at least one of the discrete decision variables.

The discrete optimization step may be solving an OPF, preferably without using an ML model. For instance, the discrete optimization step covers the case where the OPF comprises discrete decision variables. Discrete decision variables (*x̃*) may for example be generator on/off constraints, switched capacitors on/off constraints, etc. The discrete decision variables (*x̃*) are variables which possibly cannot easily be relaxed. In this case, the OPF is solved, e.g., via MIP (Mixed Integer Program / Mixed Integer Programming). Here, *x̃* ∈ *X̃* denotes the vector of decision variables used for the discrete optimization step. The corresponding second objective function may be denoted *as f̃*(*x̃*)*.* The decision variables used for the discrete optimization step may comprise the discrete decision variables. They may further comprise some or all continuous decision variables. In some embodiments, the decision variables used for the discrete optimization step are only the discrete decision variables. *X̃* may denote the feasible space for this discrete optimization step and may comprise all (linear, nonlinear, and discrete) constraints. After solving the discrete optimization step, the ML model constrained NLP may be executed to correct the solution delivered by the discrete optimization step. This may enforce a low dynamic instability risk as modeled by the ML model (which may be characterized by *g_{ML}*(*x, C*^{(*k*)}) ≤ 0). For this aim, a different set of decision variables (*x*) may be used. This different set of decision variables (*x*) may comprise the continuous decision variables, and preferably further comprise the discrete decision variables. The different set of decision variables (*x*) may be the continuous decision variables. For instance, the discrete decision variables as obtained by the discrete optimization step may be kept fixed.

In the discrete optimization step, dynamic security inequality constraints with respect to a selected list of first contingencies may be considered. The full list of the plurality of contingencies under consideration may be rated by the ML model before the discrete optimization step. To exemplarily formalize this, let *x_{OPF}* be the operating point optimized by the discrete optimization step. The ML model may be a function which predicts, for each of the plurality of contingencies *c*₁*, c*₂, *... , c_{N},* the risk of a dynamic instability under contingency *cᵢ* for the operating point *x_{OPF}* to be *g_{ML}*(*x_{OPF}, cᵢ*). A critical upper bound may be chosen on the acceptable predicted risk of contingency *g^{max}.* Then, the initial list of selected "critical" first contingencies is defined to be *C*⁽¹⁾ = (*cᵢ* | *g_{ML}*(*x_{OPF}, cᵢ*) *> g^{max}*). A choice for *g^{max}* may be the default classification boundary of the trained ML model, but there may be cases in which there is a choice to deviate from it and thus make such a method more or less conservative.

In the discrete optimization step, before any ML model constrained NLP step has happened, dynamic security inequality constraints which are based on contingencies so far not determined (estimated or similar) by the ML model may be considered.

If in step d), it may be found that there are more dynamic security inequality constraints that are potentially violated. They may be included into a discrete optimization (postprocessing) step, and the second objective function may be re-solved considering the dynamic security inequality constraints. If this discrete optimization postprocessing step destroys important properties of the original discrete optimization step solution which need to be re-established or otherwise does not converge, a later disclosed iterative variant may be used. This may circumvent the problem in conventional MINLP (mixed integer nonlinear program) approaches, which would fail when trying to contain discrete decision variables and nonlinear constraints. The method of the present disclosure may obtained a continuous solution respecting dynamic security constraints. Now, it may have to do a postprocessing step to restore the discrete variables. The changes applied by this postprocessing step could destroy the feasibility with respect to the dynamic security constraints.

Preferably, the second objective function is dependent on at least one of the continuous decision variables.

Preferably, in the discrete optimization step, the second objective function is optimized also considering the dynamic security inequality constraints; and wherein step e) further comprises repeating the discrete optimization step before repeating steps a) to e).

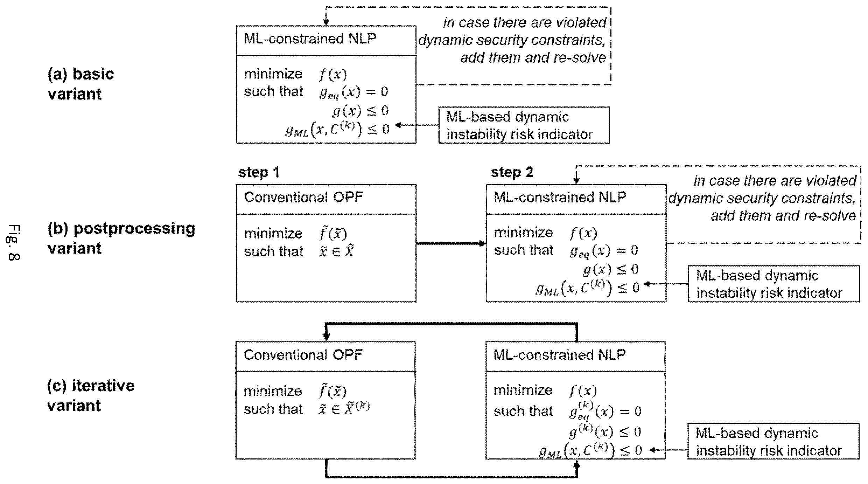

This may represent an iterative variant (see also the example in variant c in fig. 8), in which the ML model constrained NLP step (possibly comprising steps a top e) and the discrete optimization step are repeatedly iterated. Here, the two optimization problems introduced before may be alternatingly solved and thus iterated. After correcting the initial discrete optimization step solution towards lower risk of dynamic instability through the ML model constrained NLP in iteration *k =* 1, the conventional is solved again in iteration *k =* 2. Here, the feasible space *X̃*⁽²⁾ is changed relative to the previous feasible space *X̃*⁽¹⁾, to accommodate the results from the ML model constrained NLP (see also step c). For instance, the ML model defined constraints (being the dynamic security inequality constraints) can be linearized around the solution of the first ML model constrained NLP and inserted into the second discrete optimization step. After solving the second discrete optimization step, the resulting solution may be postprocessed by the second (iteration of the) ML model constrained NLP, where the feasible space (functions *g*^{(*2*)}(*x*) and *g_{eq}*⁽²⁾(*x*)) may be changed relative to the first iteration. The iterations may be terminated at any time when a sufficiently good solution has been identified.

Similar to non-iterative variant above, this approach is suitable to identify the critical dynamic security related constraints to include into the ML-constrained OPF.

Preferably, steps a) to e) are repeated until step d) results in no further other contingencies under which the power grid would not be dynamically secure.

In an alternative, steps a) to e) are repeated a predefined number of iterations. These may be exit conditions for the loop established by step e).

Preferably, the method comprises further, before steps a) to e), setting the first contingencies of the plurality of contingencies according to at least one of the following: based on a solution of an initial grid related optimization task problem, a predefined list or an empty list.

Preferably, step d) is implemented by comparing the dynamic security inequality constraints according to the other contingency in question and the plurality of decision variables optimized in a current iteration with a threshold.

The threshold may be g^{max}.

Preferably, the machine learned model is a message passing neural network.

The ML model may be a neural network (NN). Preferably, the ML model is a message passing neural network. The message passing neural network may be better scalable, it has natural mapping of the network and good physical backup. Alternatively, the ML model may be a convolutional NN. The convolutional NN may be scalable and a mature technology. Alternatively, the ML model may be a recurrent/LSTM. This is especially useful for time series. Alternatively, the ML model may be attention/transformers NN. This may be scalable, powerful and versatile. Alternatively, the ML model may be a fully connected NN.

Since the NN may be used to model constraints in optimization, it may favorably be set up with differentiable nonlinear activation functions, such as the Swish, GELU, Softplus or Mish activation function. But also, non-differentiable activation functions such as ReLU may be useful.

Preferably, dynamic security is at least one of the following during an operational transient: rotor angle stability, voltage stability, frequency stability, Harmonic content, and phase imbalance.

Preferably, the method comprises further: controlling the power grid based on the determined grid related optimization task.

Preferably, the machine learned model is trained to predict a risk of the power grid not being dynamically secure.

Preferably, the plurality of contingencies comprises at least one of: a transmission constraint, an upper and/or lower limit of a transmission line of the power grid, a limit of nodal voltage, a failure of a power line, failure of a generator, a failure a transformer, a failure of stabilizing power electronics, a failure of an high voltage direct current link, a failure of a renewable energy source, an outage of a load, and an outage of an energy storage system.

The method may be applied for a time span T. In case of a multi-period grid related optimization task for a horizon of *T*, it may be a grid related optimization task which comprises T time steps to optimize over. the ML model constrained NLPs may be constructed either by a single multi-period NLP, or this may be formulated and solved as *T* individual single-period NLPs, or it may be formulated and solved through combining any of the time steps to optimize over. In the former, physical limits of generators such as ramp rates may be respected. In a preferred variant, the original multi-period discrete optimization step is solved and iterated with single-period ML-constrained NLPs.

When setting up the ML model based dynamic security inequality constraints to control the dynamic instability risks, the constraints may be set in a way to drive all modeled dynamic instability risks very low, for instance to zero in terms of the ML-based risk assessment. In some cases, this may constrain the feasible space (too) strictly. It is possible to use a higher dynamic stability risk threshold as constraint for the ML model constrained NLP, to improve feasibility. By optimizing similar NLPs over sequences of different dynamic stability risk thresholds, an analysis of the cost of low dynamic instability risk can be conducted.

The disclosed method may also comprise operating the power grid at controlled risk of dynamic instability and/or performing what-if studies based on a solution of the method. Such a solution may be the determined plurality of decision variables after the last iteration. For both use cases, the benefit of this may be scalability: Without this disclosure, dynamic stability constrained OPF can hardly be operationally solved (that is, with an exemplary computational budget of up to one hour) for example for grids beyond a couple of hundred buses. With this disclosure, we can solve dynamic stability constrained OPF and other grid related optimization tasks with less computational resources and for larger grids, possibly up to thousands of buses and possibly beyond.

A first use case for the disclosed method may be determination of good operating conditions for a power grid in various situations. Applications range from the planning stage, where, possibly simplified, versions of grid related optimization tasks may be used to model grid operation, to the various stages in operation, from day-ahead planning of generation through Unit Commitment until short-term computation of remedial and / or preventive actions and / or setpoint changes to address a potentially unstable operating condition.

The disclosed method may be a used to characterize the operational space of a power grid. Thus, it can be used for what-if studies, in both planning and operation stages of a power grid. The proposed methodology allows extension of such what-if studies to cover aspects of dynamic stability.

The disclosure may be further combined with other ML approaches such as generative modeling to further facilitate solving dynamic stability constrained OPF. In particular, ML-models may be trained to predict / generate binary decision variables for obtaining partial solutions of the dynamic stability constrained OPF problem.

Also, another predictive or generative model may be used to predict the critical dynamic security related contingencies to consider for the OPF.

The present disclosure also relates to a computer program comprising instructions which, when the computer program is executed by a computer, cause the computer to carry out the disclosed method .

The present disclosure also relates to a non-transitory computer-readable medium having instructions stored thereon, wherein the instructions, when executed by a processor, cause the processor to perform the disclosed method.

Examples, alternatives, advantages and other explanations for some of these aspects are explained at other parts of this disclosure.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows an example infrastructure, in which any of the processes described herein may be implemented, according to an embodiment.
Fig. 2 shows illustrates an example processing system, by which any of the processes described herein may be executed, according to an embodiment.
Fig. 3 shows a flowchart for creating the simulation database.
Fig. 4 shows an example of the schematic of the resulting simulation database.
Fig. 5 shows the schematic of a general Message Passing Neural Network (MPNN) architecture.
Fig. 6 shows an example of a message passing element inside a MPNN.
Fig. 7 shows an example of a MPNN using multiple times the message passing element of fig. 6.
Fig. 8 shows exemplary ML-constrained OPFs according to this disclosure.
Fig. 9 shows a flowchart of an exemplary method for determining a grid related optimization task solution in a power grid as described.

In an embodiment, systems, methods, and non-transitory computer-readable media are disclosed for determining a grid related optimization task (solution) in a power network. After reading this description, it will become apparent to one skilled in the art how to implement the invention in various alternative embodiments and alternative applications. However, although various embodiments of the present description will be described herein, it is understood that these embodiments are presented by way of example and illustration only, and not limitation. As such, this detailed description of various embodiments should not be construed to limit the scope or breadth of the present invention as set forth in the appended claims.

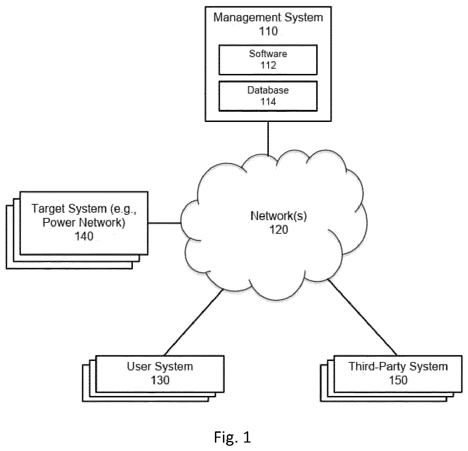

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems 130, target systems 140, third-party systems 150, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data are monitored, analyzed, and/or acted upon. However, in the context of specific, non-limiting examples that are provided throughout the present disclosure, it will be assumed that target system 140 comprises or consists of a power grid. A power grid may be a power network in which a plurality of power assets, represented as a plurality of respective buses, are connected, as nodes in a network, by edges representing power lines. A bus may be an electrical substation within the power system that contains transformers to step up or step down voltages, and circuit breakers to manage power flows between different circuits. The power network may be a power distribution network, a power transmission network, and/or the like. The power assets may comprise power resources, such as power generators, energy storage systems, electrical loads (e.g., rechargeable energy storage system or other controllable load, non-controllable load, etc.), and/or the like, as well as other types of power assets, such as transformers, circuit breakers, inverters, branches or other lines, and/or any other electrical component supporting the power system. Power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Electrical loads may comprise anything that consumes power, including, without limitation, electric vehicles, appliances, machines, commercial buildings, residential buildings, and/or the like.

Third-party system(s) 150 may comprise any type or types of computing devices capable of wired and/or wireless communication. However, it is generally contemplated that third-party system 150 would comprise one or more servers that supply extrinsic data to management system 100. The extrinsic data may represent historical, current, and/or forecasted values of one or more parameters, relevant to target system 140, such as weather parameters (e.g., temperature, humidity, wind speed, pressure, etc.), market parameters (e.g., energy prices), socio-political events (e.g., protests, law-enforcement warnings, etc.) and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL^{™}, Oracle^{™}, IBM^{™}, Microsoft SQL^{™}, Access^{™}, PostgreSQL^{™}, MongoDB^{™}, and/or the like, and including cloud-based databases, proprietary databases, and unstructured databases.

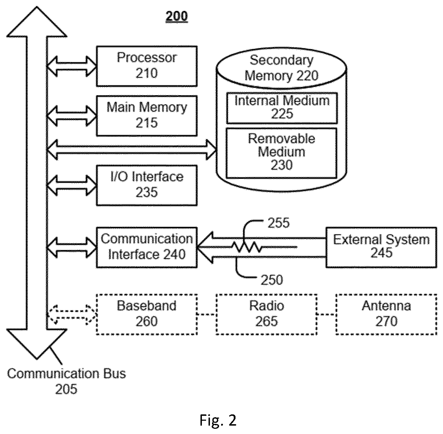

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, target system(s) 140, third-party system(s) 150, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" may be used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components may comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

Grid Related Optimization Task and Optimization:
Optimization is an approach for decision making for power grid operations. Many physical relations in a power grid can be modeled by equations, e.g. the power flow equations on an AC (alternating current) power grid. These equations may be used as constraints in the class of Optimal Power Flow (OPF) problems or other grid related optimization tasks (for short only OPF is mentioned). In an implementation of OPF, generator setpoints comprising active and reactive power are optimized with the objective to minimize loss, while satisfying the power flow equations which give the relations between power balances at all buses (also known as nodal power balances) and voltages at all buses (also known as nodal voltages). More constraints may be set up to enforce all active and reactive loads, the upper and lower limits on active and reactive power for each generator, and transmission constraints, which are established by the upper limits on current flow for all transmission lines. Transmission constraints may be motivated by the thermal limits of the transmission line, and they can be expressed through Ohm's law in terms of complex nodal voltages and the complex admittances of the trans-mission lines. Further extensions of OPF problems may comprise limits to the nodal voltages, various models of loads (e.g. ZIP loads), reactors, static VAR compensators, synchronous condensers and other devices, discrete decisions such as tap changer setpoints and generator states, modeling of unbalances, modeling of DC grids (e.g. HVDC), and others.

In addition to transmission constraints, security constraints, like the dynamic security inequality constraints, may be included into OPF. Security constraints may be transmission constraints under contingencies. For instance, the n-1 security constraints arise by formulating all transmission constraints for the failure of any single line. An OPF which comprises conventional security constraints is referred to as Security constrained OPF (SCOPF). An instance of an SCOPF task is the Security Constrained Unit Commitment (SCUC) task, which may be formulated as a multi-period (that is, comprising multiple planning time steps) OPF, with the main aim of finding an optimal generation schedule (that is, binary on-off decisions), taking into account temporal constraints on the generators (e.g. minimal time periods of a generator running or switched off), security constraints, and typically the economic objective of minimizing the total cost of generation as per the bids of the generators (that is, achieving the socially optimal solution). Other instances of OPF / SCOPF are Economic Dispatch and Security Constrained OPF.

An approach to solve SCOPF is iterative: First, the OPF is solved without security constraints and possibly even without transmission constraints. The violated transmission / security constraints are identified and (a subset of this set is) included the OPF problem, after which the OPF problem is solved again. This process may be iterated until convergence.

OPFs may model the physics of the steady state operation of a power grid through power flow and other steady state models. Thus, an OPF can deliver optimized operational configurations (also called operating points and/or may correspond to specific values of the plurality of decision variables) which satisfy operational constraints related to the steady state operation, including security constraints. In contrast, dynamic stability and dynamic security are often not captured by steady state models and hence not respected by conventional OPF. Dynamic stability is given if, during an operational transient (typically caused by a contingency or other abrupt disturbance), the system remains stable. Exemplary important dynamical instabilities are:
- Rotor angle instability, where one or more synchronous machines disconnect from the rest of the system in terms of rotor angle.
- Voltage instability, where the voltage at one or more transmission buses deviates too much/ for too long from established operational limits, which occurs when the power grid cannot sustain consistent voltage magnitudes, potentially leading to voltage collapse or outages.
- Frequency instability, where the grid frequency fluctuates uncontrollably beyond acceptable limits or otherwise behaves in an undesirable way, risking operational failures. If a dynamic instability occurs in case of a contingency, the system is in a dynamically insecure state.

Dynamic stability and security can be tried to be assessed through dynamic simulations of the grid. For instance, to detect rotor angle instability, the so-called swing equation needs to be simulated.

There have been attempts to model dynamic stability constraints in OPF. The literature A. Berizzi et al.: "OPF model with dynamic security constraints: a state of the art review" (IEEE) discusses several direct and indirect approaches, which are all computationally very expensive, their applicability is restricted to grids of limited size, and they can cover only a limited number of contingencies.

In addition to the thermal capacity limits of lines, the power transfer capabilities of a transmission network may be constrained by the risks of transient instability or voltage instability. Dynamic security constraints may be considered in grid operations by Interface MW (mega watts) flow limits and Nomograms. An "interface" may be a collection of lines in the transmission network that together deliver power from one area to another. There may be limits on the combined MW flow across the interface in one direction or both directions. A "Nomogram" may be used to define a constraint relationship between two power system MW variables, one representing the constrained variable and one representing the independent variable. Nomograms may include: 1) AC interface or line MW flow versus AC interface or line MW flow and 2) AC interface (or line) MW flow versus area or plant MW Generation. Nomograms can be used to not only restrict the MW flow of power over the transmission network but can also be used to restrict the area or plant Generation.

A TSO (transmission system operator) may define Interface limits and Nomograms based on operational planning studies and maintains a library of Interface and Nomogram definitions and associated parameters to reflect current power system conditions. Active Interfaces and Nomograms may be incorporated into generation dispatch optimizations as additional security constraints.

This disclosure shows approaches, based on Machine Learning (ML) models, especially Artificial Neural Networks (NN), to model dynamic stability / security constraints in OPF (and other grid related optimization tasks). In the disclosure, dynamic security may never be directly evaluated through simulation of a dynamical system (which could be computationally expensive and not scalable to large grids), but always modeled by a NN. This and other technical approaches disclosed herein make sure that the proposed methodology can scale to large grids, which is the key differentiator from prior art.

Disclosed is a method and system to take operational decisions that are aware of dynamic security. Specifically, a dynamic security constrained OPF method is disclosed. It is built through the following steps. The steps of creation of a database of dynamic simulations, computation of an instability risk indicator and training of a ML model to predict the instability risk indicator (possibly in form of dynamic security inequality constraints) below may be executed offline, hence they may be not time critical.

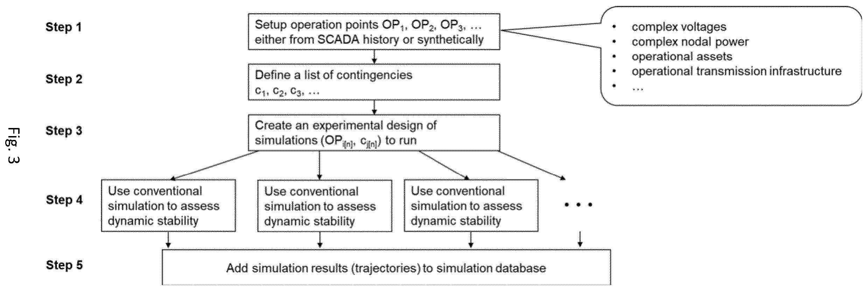

In order to train a NN for the intended use, a database of dynamic simulations may be created. Data may be gained through conventional dynamic simulation. An example of this is shown in fig. 3.

Fig. 3 shows a flowchart for creating the simulation database, comprising the following steps:
Step 1: Set up of operating conditions or operating points OP₁, OP₂, OP₃, ..., OPₖ which may define the space over which the DSA (dynamic security analysis) risk assessment shall be conducted. An operating point may be characterized by the complex power (active and reactive power) of generation and load at each bus of the grid, complex voltages (amplitude and angle) at each bus, operating state of assets (e.g. generators running or not running), and the topology of the grid (that is, operational status of lines and transformers). Operating points can either be compiled from the historical recordings, or synthetical operating points can be created by appropriate means.
Step 2: Set up a list of contingencies *c*₁*, c*₂, c₃, ..., cₘ to be assessed within DSA. Contingencies are failures of assets: lines, transformers, generators, FACTS devices, etc.
Step 3: Create an "experimental design" of simulations to run. This may be a list of combinations of operating points and contingencies (OP_{i[n]}, c_{j[n]}) which is designed to cover the cartesian product of operating points and contingencies well. This may but need not be a full factorial design, i.e. comprise all possible combinations (OP₁, c₁), (OP₁, c₂), ..., (OP₁, cₘ), (OP₂, c₁), (OP₂, c₂), ..., (OP₂, Cₘ), ..., (OPₖ, c₁), (OPₖ, c₂), ..., (OPₖ, cₘ).
Step 4. Run all dynamic simulations defined by (OPi[n], cj[n]). This may be done either sequentially or in parallel.
Step 5. Add the simulated trajectories, in particular the voltage angles, and/or the desired derived quantities, to the simulation database.

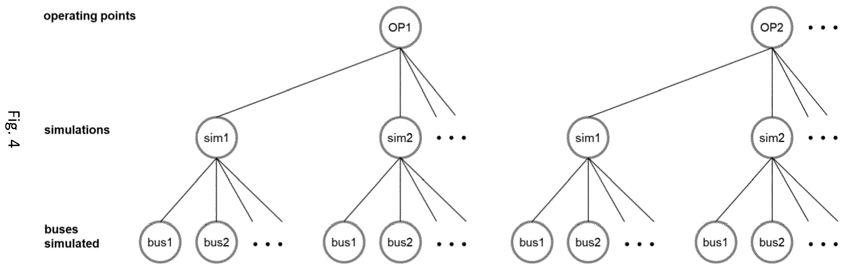

Fig. 4 shows an example of the schematic of the resulting simulation database. Each simulated operating points is associated with multiple simulations, related to multiple contingencies. Each simulation comprises data for each bus of the grid.

Each of the simulations in the simulation database may be associated with one or more risk indicators that measure the risk of instability. In a preferred embodiment, the same risk indicators are used, since they facilitate training of a NN that can estimate the risk of dynamic instability - in particular rotor angle stability - to high accuracy.

The Machine Learning (ML) model may be trained on the data described above and with the stability risk indicator introduced above as label for each bus. For a prediction task at bus level of a power grid, an Artificial Neural Network is an attractive option because it can be designed in a way that is scalable to large grids. In particular, a Message Passing Neural Network can have attractive scaling properties.

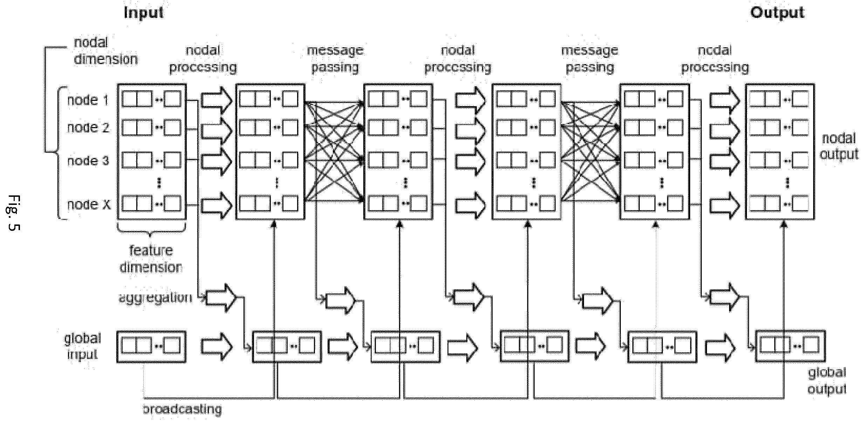

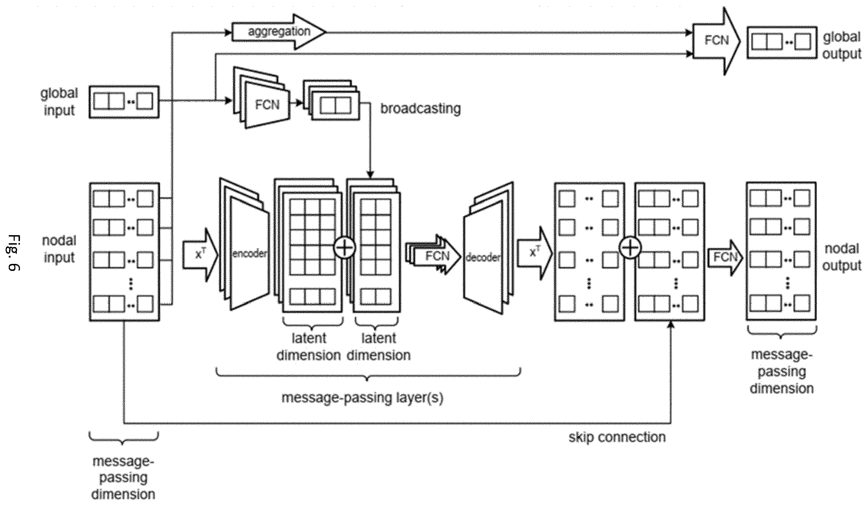

Fig. 5 shows the schematic of a general Message Passing Neural Network (MPNN) architecture. Further information (also about fig. 6) may be found in the patent application before the European Patent Office with the application number 23 203 196.3, which is herewith included in its entirety. This architecture, in addition to processing data at bus level, also processes data at global level. Communication between the data at bus level and the data at global level is implemented through steps of aggregation and broadcasting. For instance, in order to obtain a prediction of the stability of the entire simulation, conventional max-pooling may be used to aggregate stability predictions (or intermediate values) at bus level. In fig. 5, the bracket for nodal dimension may also show data per bus of the power grid (nodal data).

Fig. 6 shows an example of a message passing element inside a MPNN. Here, message passing is realized through an encoder-decoder sequence which maps the data at all buses into a latent space and back. In fig. 6, the "skip connection" may also be a shortcut connection.

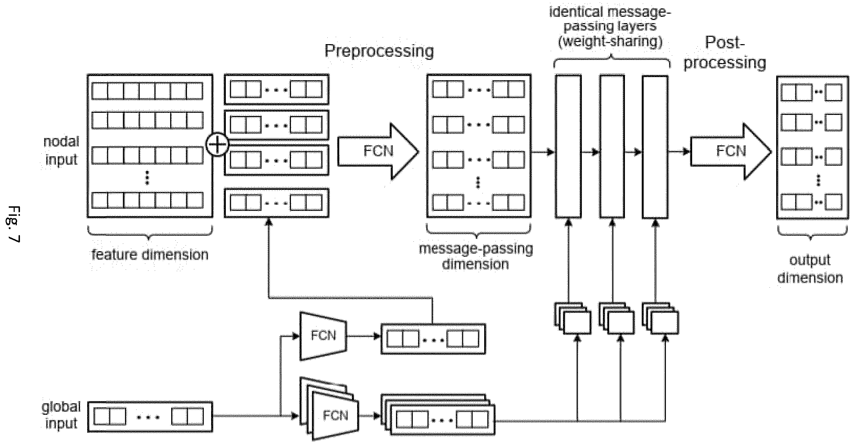

Fig. 7 shows an example of a MPNN using multiple times the message passing element of fig. 6. In fig. 7, the nodal input may be corresponding to bus 1 to bus n (represented by the rows in the box on the left).

Fig. 8 shows exemplary ML-constrained OPFs according to this disclosure. In the basic variant (a), a single NLP including constraints modeled by ML is solved (may correspond to an example of steps a to e as disclosed elsewhere in this document). In variant (b), a stepwise process is implemented: In the first step, a conventional OPF is solved, that does not consider dynamic instability risks modeled by ML (may correspond to an example of the discrete optimization step). This may be achieved for instance through solving a MIP. In the second step, the achieved solution is postprocessed by another OPF which is modeled as an NLP and controls the dynamic instability risks. Variant (c) is similar to variant (b), but here, different variants of the OPF problem are alternatingly solved.

In the embodiments shown in fig. 8, the ML-constrained NLP may be the ML model constrained NLP; the conventional OPF may be the discrete optimization step; dynamic instability risks modeled by ML may be the dynamic security inequality constraints. The objective function may correspond to f(x); the continuous decision variables may correspond to x; the dynamic security inequality constraints may correspond to g_{ML}(x, C^{(k)}); the contingencies may correspond to C(k); further one or more equality constraints may correspond to g_{eq}(x) = 0; further one or more inequality constraint may correspond to g(x) ≤ 0; the discrete decision variables may correspond to (*x̃*); the (first) objective function may correspond to f(x); the second objective function may correspond to *f̃*(*x̃*)*.*

The disclosed approach may integrate the ML model predictions in a NLP formulation of OPF or other grid related optimization tasks. An NLP is specified by a (linear or) nonlinear objective function and (linear or) nonlinear constraints. In this way, the ML model does not fundamentally increase the solving complexity of the OPF.

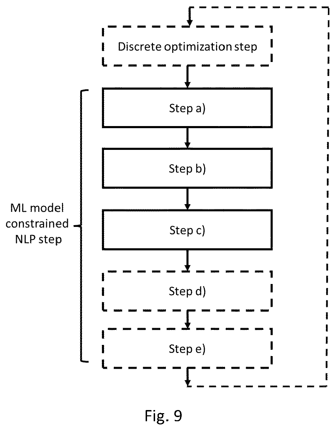

Fig. 9 shows a flowchart of an exemplary method for determining a grid related optimization task solution in a power grid as described elsewhere in this document.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for determining a grid related optimization task solution for a power grid described by a plurality of decision variables, the method comprising:
a machine learned model constrained nonlinear program, NLP, step comprising steps a) to c), preferably in this order:
a) determining, by a machine learned model, dynamic security inequality constraints which are dependent on continuous decision variables and a plurality of contingencies;
b) optimizing an objective function over the continuous decision variables of the plurality of decision variables and first contingencies of the plurality of contingencies, wherein the dynamic security inequality constraints are considered, wherein at least one of the objective function and the dynamic security inequality constraints is non-linear;
c) setting the continuous decision variables of the plurality of decision variables according to the optimized objective function; and
determining the grid related optimization task solution based on the plurality of decision variables.

2. Method according to claim 1, wherein the machine learned model constrained NLP step further comprises steps d) and e), preferably in that order and after step c):
d) determining whether the power grid would be dynamically secure with other contingencies of the plurality of contingencies not comprised by the first contingencies; and
e) adding the other contingencies under which the power grid is determined to not be dynamically secure to the first contingencies and, with the other contingencies added to the first contingencies, repeating steps a) to e).

3. Method according to claim 1 or 2, the method further comprising:
a discrete optimization step comprising: optimizing a second objective function over discrete decision variables of the plurality of decision variables,
wherein the discrete optimization step is implemented before the machine learned model constrained NLP step, and wherein the objective function is dependent on at least one of the discrete decision variables .

4. Method according to claim 3, wherein the second objective function is dependent on at least one of the continuous decision variables.

5. Method according to claim 3 or 4, when dependent on claim 2,
wherein, in the discrete optimization step, the second objective function is optimized also considering the dynamic security inequality constraints; and
wherein step e) further comprises repeating the discrete optimization step before repeating steps a) to e).

6. Method according to any one of claims 2 and 3 to 5, when dependent on claim 2, wherein steps a) to e) are repeated until step d) results in no further other contingencies under which the power grid would not be dynamically secure.

7. Method according to any one of claims 2 and 3 to 6, when dependent on claim 2, the method further comprising, before steps a) to e), setting the first contingencies of the plurality of contingencies according to at least one of the following: based on a solution of an initial grid related optimization task problem, a predefined list or an empty list.

8. Method according to any one of claims 2 and 3 to 7, when dependent on claim 2, wherein step d) is implemented by comparing the dynamic security inequality constraints according to the other contingency in question and the plurality of decision variables optimized in a current iteration with a threshold.

9. Method according to any one of claims 1 to 8, wherein the machine learned model is a message passing neural network.

10. Method according to any one of claims 1 to 9, wherein dynamic security is at least one of the following during an operational transient: rotor angle stability, voltage stability, frequency stability, Harmonic content, and phase imbalance.

11. Method according to any one of claims 1 to 10, the method further comprising: controlling the power grid based on the determined grid related optimization task.

12. Method according to any one of claims 1 to 11, wherein the machine learned model is trained to predict a risk of the power grid not being dynamically secure.

13. Method according to any one of claims 1 to 12, wherein the plurality of contingencies comprises at least one of: a transmission constraint, an upper and/or lower limit of a transmission line of the power grid, a limit of nodal voltage, a failure of a power line, failure of a generator, a failure a transformer, a failure of stabilizing power electronics, a failure of an high voltage direct current link, a failure of a renewable energy source, an outage of a load, and an outage of an energy storage system.

14. A computer program comprising instructions which, when the computer program is executed by a computer, cause the computer to carry out the method of any one of claims 1 to 13.

15. A non-transitory computer-readable medium having instructions stored thereon, wherein the instructions, when executed by a processor, cause the processor to perform the method according to any one of claims 1 to 13.
